# EUROPÄISCHE PATENTSCHRIFT

(11) **EP 1 849 348 B1**
(45) Veröffentlichungstag und Bekanntmachung des Hinweises auf die Patenterteilung: **26.11.2008**
(21) Anmeldenummer: 07106592.4
(22) Anmeldetag: 20.04.2007
(51) Int. Cl.: A01D 43/08, A01F 29/06

(54) **Nachzerkleinerungsvorrichtung mit abnehmbaren Nachschneidemessern**
Fine crushing device with removable crusher blades
Dispositif de broyage secondaire doté de lames de coupes secondaires amovibles

(30) Priorität: 29.04.2006 DE 102006020072
(43) Veröffentlichungstag der Anmeldung: 31.10.2007
(73) Patentinhaber: Deere & Company, Moline, IL 61265-8098 (US)
(72) Erfinder: Terrier, Xavier, 57200, Sarreguemines (FR); Zinck, Patrick, 57670, Vibersviller (FR)
(74) Vertreter: Holst, Sönke

(56) Entgegenhaltungen:
- DE-A1- 4 444 054
- DE-A1- 19 535 175
- US-A- 2 842 175

## Beschreibung

Die Erfindung betrifft eine Nachzerkleinerungsvorrichtung mit einer Anzahl an in sich flachen Nachschneidemessern, die mit geschärften vor- und nachlaufenden Kanten und mit Öffnungen ausgestattet sind, deren Achsen sich quer zur Fläche der Nachschneidemesser erstrecken, wobei die Nachschneidemesser mittels eines Befestigungselements, das sich durch eine Öffnung eines Nachschneidemessers erstreckt, lösbar an einer Halterung fixierbar und angrenzend an den Hüllkreis von Häckselmessern einer Häckseltrommel eines Feldhäckslers anbringbar sind.

Feldhäcksler werden in der Landwirtschaft verwendet, um Erntegut mittels einer Erntegutaufnahmevorrichtung von einem Feld abzuschneiden oder aufzusammeln, über eine Zuführeinrichtung einer Häckseleinrichtung zuzuführen, die bei selbstfahrenden Feldhäckslern in der Regel als Häckseltrommel ausgeführt ist, um es zu häckseln und es, in der Regel nach einer Beschleunigung mittels eines Gebläses, durch einen in seiner Position verstellbaren Auswurfkrümmer auf ein Transportfahrzeug auszutragen. Die geernteten Pflanzen werden in den meisten Fällen als Silage zum Verfüttern an Tiere oder in jüngerer Zeit zur Biogasproduktion verwendet.

Bei der Ernte von Mais wird Wert darauf gelegt, die Maiskörner anzuschlagen oder zu öffnen, um ihre Verdauung durch Tiere zu verbessern. Dazu verwendet man Körnerprozessoren mit zwei profilierten Walzen, zwischen denen das Erntegut stromab der Häckseltrommel hindurchgeführt wird.

Außerdem werden zum Zerkleinern von Lieschblättern oder anderen Pflanzenteilen, die mit der Häckseltrommel nicht immer optimal zerkleinerbar sind, insbesondere zur Ernte von Pflanzen für die Biogasproduktion, so genannte Nachschneidemesser verwendet, die seitlich nebeneinander angeordnet an den Hüllkreis der Häckseltrommel angrenzen und in der Bewegungsbahn des die Häckseltrommel verlassenden, zerkleinerten Ernteguts angeordnet sind. Eine derartige Nachzerkleinerungsvorrichtung wird in der als gattungsbildend angesehenen DE 44 44 054 A beschrieben. Dort wird vorgeschlagen, in der Wand des Gehäuses der Häckseltrommel Schlitze einzubringen und die Nachschneidemesser an einem Halter anzubringen, so dass alle Nachschneidemesser in den Erntegutstrom eingebracht oder bei geänderten Erntebedingungen daraus wieder entnommen werden können. Einzelheiten der Anbringung der Nachschneidemesser am Halter werden nicht beschrieben.

In der US 6 327 970 B wird vorgeschlagen, unterhalb der Häckseltrommel eine Platte, mit oberseitig daran befestigten, seitlich nebeneinander und in mehreren Reihen hintereinander angeordneten Messern anzubringen, um im Erntegut enthaltene Körner aufzuschlagen. Zur Verlängerung der Standzeit sind die stromauf liegenden Kanten der Messer mit einer harten Karbidschicht ausgestaltet.

Bei den bekannten stationären, mit einer Häckseltrommel zusammenwirkenden Nachschneideeinrichtungen erweist sich der Austausch der Messer im Verschleißfall als problematisch. Gemäß der US 6 327 970 B sind die Messer in nicht näher definierter Weise an der Oberseite einer das Gehäuse der Häckseltrommel bildenden Platte befestigt, so dass ggf. die ganze Platte mit allen Messern auszutauschen und zu entsorgen ist. Bei von der Anmelderin derzeit vertriebenen Nachschneideeinrichtungen gemäß DE 44 44 054 A sind die flachen Nachschneidemesser einzeln durch jeweils zwei Schrauben an Winkeln befestigt, die an der Unterseite des Gehäusebodens der Häckseltrommel angebracht sind, und erstrecken sich durch Schlitze im Gehäuseboden nach oben in den Erntegutstrom. Zum Austausch eines Nachschneidemessers sind demnach jeweils zwei Schrauben und Muttern zu lösen und abzunehmen und nach dem Wechsel des Nachschneidemessers anzubringen und festzuziehen, was auf Grund der recht hohen Anzahl der Nachschneidemesser sehr zeitaufwändig ist.

In der DE 195 35 175 A wird ein Strohhäcksler für einen Mähdrescher beschrieben, der einen mit sich axial und radial erstreckenden Mitnehmerplatten ausgestatteten Rotor und ein mit stationären Häckselmessern ausgestattetes Gehäuse umfasst, die das Stroh zerkleinern. Um anschließend in Längsrichtung orientiertes Stroh ebenfalls zu zerkleinern, sind stromab der Häckselmesser Gegenschneidplatten angebracht. Diese Gegenschneidplatten sind in sich flach und mit konsolenartigen Halterungen verbunden, die eine sich parallel zur Drehachse des Rotors erstreckende Öffnung aufweisen. Durch diese Öffnung erstreckt sich ein Bolzen, auf dem die Gegenschneidplatten schwenkbar gelagert und durch Federkraft in Richtung auf den Rotor vorgespannt sind. Die Gegenschneidplatten sind in mehrere Segmente aufgeteilt, von denen jedes einzelne beim Auftreffen eines harten Fremdkörpers für sich ausweichen kann.

### Aufgabe der Erfindung

Die der Erfindung zu Grunde liegende Aufgabe wird darin gesehen, eine Nachschneideeinrichtung bereitzustellen, bei der ein vereinfachter Wechsel der Nachschneidemesser möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Nachzerkleinerungsvorrichtung umfasst eine Halterung und mehrere in sich flache Nachschneidemesser, die mit geschärften vor- und nachlaufenden Kanten und mit Öffnungen ausgestattet sind, deren Achsen sich quer zur Fläche der Nachschneidemesser erstrecken. Die Nachschneidemesser werden durch ein Befestigungselement an der Halterung lösbar angebracht und sind angrenzend an den Hüllkreis von Häckselmessern einer Häckseltrommel eines Feldhäckslers anbringbar. Es wird vorgeschlagen, durch ein einziges Befestigungselement mehrere Nachschneidemesser gleichzeitig an der Halterung anzubringen, um die Nachschneidemesser leichter wechseln oder umdrehen zu können, da zum Wechsel mehrerer Nachschneidemesser jeweils nur ein einziges Befestigungselement (oder in dem Fall, das die Nachschneidemesser durch zwei oder mehr Befestigungselemente an der Halterung fixiert werden, mehrere Befestigungselemente) abgenommen und wieder angebracht werden müssen. Es ist jedenfalls nicht für jedes Nachschneidemesser ein nur ihm zugeordnetes Befestigungselement abzunehmen und anzubringen.

In einer bevorzugten Ausführungsform umfasst die Halterung eine Platte mit Schlitzen, durch welche sich die Nachschneidemesser erstrecken. Das Befestigungselement wird kraft- und/oder formschlüssig mit der Platte verbunden.

Eine formschlüssige Verbindung kann durch eine als Befestigungselement dienende Schraube oder Gewindestange mit Muttern hergestellt werden, wobei sich die Schraube oder Gewindestange durch die Löcher der Nachschneidemesser und Öffnungen in endseitigen, mit der Platte verbundenen Seitenwänden oder endseitigen zylindrischen, an der Platte anliegenden Hülsen erstreckt und durch die Mutter(n) gesichert wird. Das Befestigungselement sichert die Nachschneidemesser in den beiden quer zu seiner Längsrichtung verlaufenden Richtungen, während die Nachschneidemesser in der verbleibenden Richtung, die der Längsrichtung des Befestigungselements entspricht, durch die von den Nachschneidemessern durchdrungenen Schlitze in der Platte fixiert werden.

Eine formschlüssige Verbindung kann auch durch einen als Befestigungselement dienenden Stift hergestellt werden, der in seiner Längsrichtung arretiert wird und an einer Seite der Platte anliegt, während sich eine schneidende Kante der Nachschneidemesser an der anderen Seite der Platte befindet. Der Stift sichert das Nachschneidemesser in der sich quer zur Flussrichtung des Ernteguts erstreckenden Richtung.

Eine kraftschlüssige Verbindung kann hergestellt werden, indem zwischen benachbarten Nachschneidemessern Distanzstücke eingefügt und alle Nachschneidemesser durch eine Schraube oder einen Exzenterhebel oder einen Kniehebel gegeneinander gedrückt werden.

Die Fixierung der Nachschneidemesser in der Flussrichtung des Ernteguts kann durch an der vor- und nachlaufenden Seite der Platte angebrachte Schenkel erfolgen, an denen Bereiche der Nachschneidemesser anliegen.

Die beschriebene Halterung kann an der Unterseite einer Bodenplatte angebracht werden, die den Hüllkreis der Häckselmesser der Häckseltrommel eines Feldhäckslers teilumfangsmäßig umgibt. Die Halterung ist demnach separat von der Bodenplatte ausgeführt und vorzugsweise davon demontierbar. Sie kann auch in einem verstellbaren Abstand von der Häckseltrommel angebracht sein, um die Nachschneidemesser im Verschleißfall näher an die Häckseltrommel heranbringen zu können.

Die Nachschneidemesser erstrecken sich durch Schlitze in der Bodenplatte angrenzend an den Hüllkreis der Häckselmesser der Häckseltrommel in der Flussrichtung des Ernteguts, um ggf. nicht hinreichend zerkleinertes Erntegut, wie Lieschblätter, besser zu zerkleinern.

### Ausführungsbeispiel

In den Zeichnungen sind zwei nachfolgend näher beschriebene Ausführungsbeispiele der Erfindung dargestellt. Es zeigt:
- Fig. 1: einen Feldhäcksler mit einer Häckseltrommel und einer Nachzerkleinerungsvorrichtung,
- Fig. 2: eine seitliche Ansicht der Häckseltrommel und der Nachzerkleinerungsvorrichtung,
- Fig. 3: eine perspektivische Ansicht einer ersten Ausführungsform einer Halterung der Nachzerkleinerungsvorrichtung mit daran angebrachten Messern, und
- Fig. 4: eine perspektivische Ansicht einer zweiten Ausführungsform einer Halterung der Nachzerkleinerungsvorrichtung mit daran angebrachten Messern.

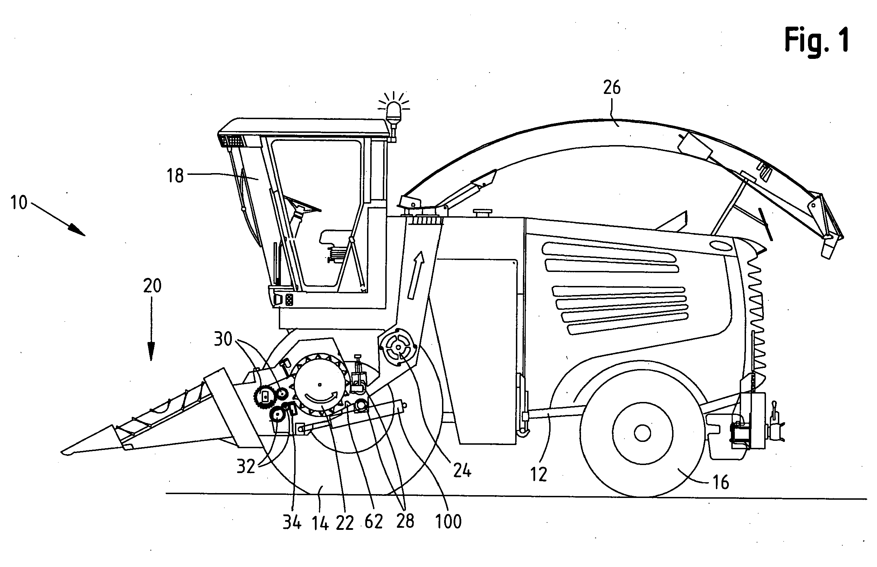

Ein in der Figur 1 gezeigter selbstfahrender Feldhäcksler 10 baut sich auf einem Rahmen 12 auf, der von angetriebenen vorderen Rädern 14 und lenkbaren rückwärtigen Rädern 16 getragen wird. Die Bedienung des Feldhäckslers 10 erfolgt von einer Fahrerkabine 18 aus, von der aus ein zur Ernte stängelartiger Pflanzen geeigneter Erntevorsatz 20 einsehbar ist. Mittels des Erntevorsatzes 20, der in der dargestellten Ausführungsform ein reihenunabhängig arbeitendes Maisgebiss ist, vom Boden aufgenommenes Gut, z. B. Mais, Getreide oder mittels einer Pickup aufgenommenes Gras, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über eine in ihrer Position verstellbare Austrageinrichtung 26. Zwischen der Häckseltrommel 22 und der Fördervorrichtung 24 erstreckt sich ein Körnerprozessor 28, durch den das zu fördernde Gut der Fördervorrichtung 24 tangential zugeführt wird. Richtungsangaben, wie vorn und hinten, beziehen sich auf die Vorwärtsrichtung des Feldhäckslers 10, die in der Figur 1 nach links verläuft.

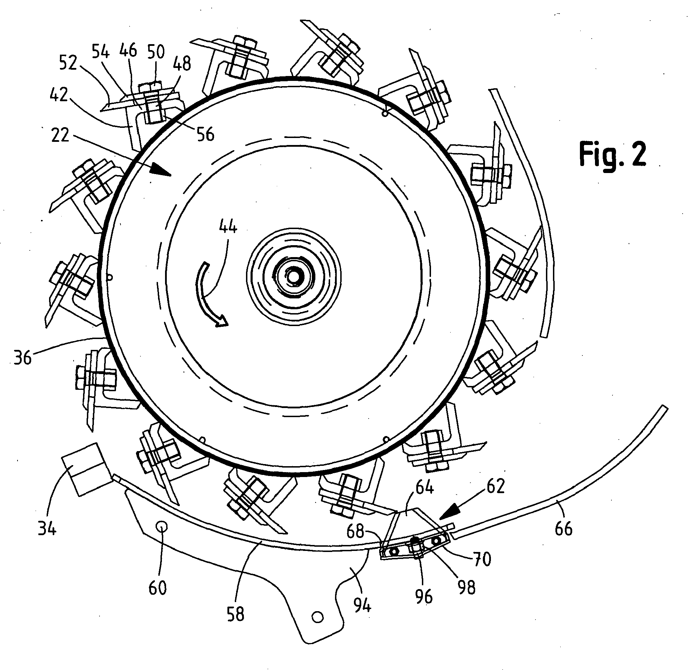

Die Häckseltrommel 22 wirkt mit einer Gegenschneide 34 zusammen, um das aufgenommene Erntegut zu zerkleinern. Die Häckseltrommel 22 (s. Figur 2) umfasst eine geschlossene, zylindrische Oberfläche 36. Auf der Oberfläche 36 sind winkelförmige Messerhalter 42 verteilt. In der in Drehrichtung der Häckseltrommel 22, die in Richtung des Pfeils 44 verläuft, nachlaufenden Fläche 46 der Messerhalter 42 sind Bohrungen 48 eingebracht, durch die sich Schrauben 50 zur Befestigung der Häckselmesser 52 erstrecken. Die Schrauben 50 werden von außen her durch Löcher in Druckplatten 54, in Schlitze oder Bohrungen der Häckselmesser 52, durch die Bohrungen 48 und in Gewindebohrungsplatten 56 oder Muttern eingeführt, die sich an der Innenseite der Messerhalter 42 befinden und zum Halten der Häckselmesser 52 an den Messerhaltern 42 dienen.

An den Messerhaltern 42 können flache, rechteckige Häckselmesser 52 befestigt werden, die einen hackenden Schnitt bewirken, oder Häckselmesser 52 mit einer im Winkel zur Drehachse der Häckseltrommel 22 verlaufenden Schneidkante, die einen ziehenden Schnitt bewirken.

Die Figur 2 zeigt weiterhin, dass sich im unteren, stromauf der Fördervorrichtung 24 angeordneten Bodenbereich eines die Häckseltrommel 22 umschließenden Gehäuses eine dem Hüllkreis der Häckselmesser 52 der Häckseltrommel 22 folgende, den erwähnten Hüllkreis teilumfangsmäßig umgebende Bodenplatte 58 befindet. Die Bodenplatte 58 ist um eine vordere Schwenkachse 60 schwenkbar und abnehmbar am Rahmen 12 angebracht. In ihrem rückwärtigen Bereich trägt sie eine Nachzerkleinerungsvorrichtung 62, die eine Anzahl seitlich nebeneinander angeordneter Nachschneidemesser 64 umfasst, die sich angrenzend an den Hüllkreis der Häckselmesser 52 der Häckseltrommel 22 in der Flussrichtung des Ernteguts erstrecken. Die Bodenplatte 58 umfasst eine Anzahl an Schlitzen 68, die vorzugsweise der Anzahl der Nachschneidemesser 64 entspricht und durch die sich die unterhalb der Bodenplatte 58 an einer Halterung 70 befestigten Nachschneidemesser 64 erstrecken.

Die Bodenplatte 58 ist als eine geschlossene und leicht nach oben gekrümmte Wand mit einer glatten Innenfläche ausgebildet, auf der das gehäckselte Erntegut entlang gleitet. Stromab der Bodenplatte 58 folgt ein Bodenblech 66, an das sich der Körnerprozessor 28 anschließt. Die Positionierung der Nachschneidemesser 64 gegenüber der Häckseltrommel 22 und ihre Wirkungsweise entsprechen der Offenbarung der DE 44 44 054 A, die durch Verweis mit in die vorliegenden Unterlagen aufgenommen wird.

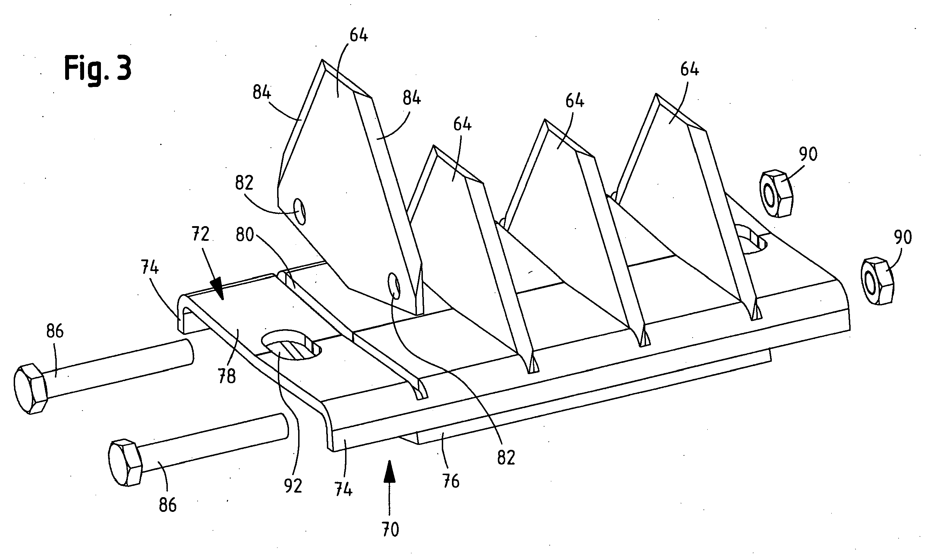

Die Figur 3 zeigt eine perspektivische Ansicht der Halterung 70 und der Nachschneidemesser 64. Die Halterung 70 umfasst ein oberes, U-förmiges Element 72 mit einer mittleren Platte 78 und sich an deren Rändern davon nach unten erstreckenden Schenkeln 74, die durch ein unteres Bodenelement 76 untereinander verbunden sind. Das untere Bodenelement 76 könnte auch entfallen. Die Schenkel 74 und die Platte 78 erstrecken sich quer zur Fahrtrichtung. Die mittlere Platte 78 ist mit einer Anzahl von Schlitzen 80 ausgestattet, die der Anzahl der Nachschneidemesser 64 und der Anzahl der Schlitze 68 der Bodenplatte 58 entspricht. Im montierten Zustand erstreckt sich jeweils ein Nachschneidemesser 64 durch einen Schlitz 80 in der mittleren Platte 78 und durch einen Schlitz 68 in der Bodenplatte 58.

Die Nachschneidemesser 64 sind in sich flach und etwa trapezförmig geformt und haben eine kürzere Oberseite und eine längere Unterseite, in deren Nachbarschaft zwei kreisförmige Öffnungen 82 angeordnet sind, deren Achsen sich quer zur Fläche der Nachschneidemesser 64 erstrecken. Die vor- und nachlaufenden Kanten 84 der Nachschneidemesser 64 sind geschärft und vorzugsweise an der nicht angeschliffenen Seite mit einer harten Beschichtung (z. B. WC) ausgestattet, um ihre Standzeit zu verlängern.

Die Unterseiten der Nachschneidemesser 64 werden durch die Schlitze 80 der mittleren Platte 78 hindurch gesteckt und dort durch Befestigungselemente 86 in Form von Schrauben 86 fixiert, von denen jeweils ein Befestigungselement 86 durch eine der Öffnungen 82 gesteckt wird. Die Befestigungselemente 86 erstrecken sich über die gesamte Breite der Halterung 70 und werden an ihren äußeren, vom Schraubenkopf 88 beabstandeten Enden durch Muttern 90 fixiert. Die Schraubenköpfe 88 und die Muttern 90 erstrecken sich jeweils durch Öffnungen in seitlichen Wänden (nicht gezeigt) der Halterung 70 und liegen an den Außenflächen der seitlichen Wände an, welche sich an den Unterseiten der mittleren Platte 78 befinden. Die Befestigungselemente 86 fixieren die Nachschneidemesser 64 in vertikaler Richtung und in der Flussrichtung des Ernteguts. Anstelle von Schrauben könnten bei der Ausführungsform nach Figur 3 auch Gewindestangen als Befestigungselemente 86 verwendet werden, die an beiden Enden durch Muttern 90 fixiert werden.

Alternativ oder zusätzlich zur beschriebenen Befestigung an Öffnungen in seitlichen Wänden an den Unterseiten der Platte 78 werden in der Nähe der Muttern 90 und der Schraubenköpfe 88 zylindrische Distanzhülsen (nicht gezeigt) aufgesteckt, die ihrerseits von unten her an der mittleren Platte 78 anliegen. Die Befestigungselemente 86 werden dann in ihrer Längsrichtung dadurch gesichert, dass sie an Seitenwänden 94 der Bodenplatte 58 anliegen.

Die Nachschneidemesser liegen unterhalb der Kanten 84 mit ihren vor- und nachlaufenden Flächen an den Innenseiten der Schenkel 74 an und werden somit zusätzlich in der Flussrichtung des Ernteguts fixiert. In axialer Richtung des Befestigungselements 86 werden die Nachschneidemesser 64 durch die Schlitze 80 und 68 fixiert.

Die Halterung 70 und ihre Nachschneidemesser 64 können sich über die gesamte Breite der Häckseltrommel 22 oder einen Teilbereich davon erstrecken. Im letztgenannten Fall können mehrere Halterungen 70 seitlich nebeneinander angeordnet werden. Es können auch mehrere Halterungen 70 in Flussrichtung des Ernteguts hintereinander angebracht werden. Die Befestigungselemente 86 können jeweils alle Nachschneidemesser 64 einer Halterung 70 fixieren oder eine Teilmenge davon, wenn z. B. zwei Befestigungselemente 86 sich jeweils über die halbe Breite der Halterung 70 erstrecken.

Die Halterung 70 ist ihrerseits mit der Bodenplatte 58 unlösbar, z. B. durch Schweißen, oder lösbar verbunden, z. B. durch Muttern 98, die auf sich durch Löcher 92 in der mittleren Platte 78 erstreckende Schrauben 96 geschraubt werden, welche zum Beispiel von unten an der Bodenplatte 58 angepunktet sind (s. Figur 2) oder durch Bohrungen in der Bodenplatte 58 gesteckt werden und z. B. einen versenkbaren Kopf haben, damit der Materialfluss entlang der Oberfläche der Bodenplatte 58 nicht beeinträchtigt wird. Die Muttern 98 sind von unten her zugänglich, nachdem der Erntevorsatz 20 mittels eines Zylinders 100 um die Achse der Häckseltrommel 22 nach oben geschwenkt wurde. Die Löcher 92 sind als Langloch mit einer sich nach vorn erstreckenden, längeren Achse ausgeführt, damit die Nachschneidemesser 64 im Verschleißfall näher an die Häckseltrommel 22 gestellt werden können.

Ein Wechsel der Nachschneidemesser 64 im Verschleißfall ist relativ einfach. Zunächst wird die Halterung 70 von der Bodenplatte 58 abgenommen, nachdem der Erntevorsatz 20 nach oben geschwenkt und die Muttern 98 abgeschraubt wurden. Es wäre auch denkbar, die Bodenplatte 58 um die Schwenkachse 60 nach unten zu schwenken und/oder aus dem Feldhäcksler 10 auszubauen, um Zugang zur Halterung 70 zu haben. Dann sind lediglich die Muttern 90 von den Befestigungselementen 86 zu lösen und abzunehmen, sodass die Befestigungselemente 86 aus den Öffnungen 82 heraus gezogen und die Nachschneidemesser 64 aus den Schlitzen 80 heraus genommen werden können. Die neuen Nachschneidemesser 64 werden dann in die Schlitze 80 gesteckt, wobei das untere Bodenelement 76 eine richtige vertikale Ausrichtung der Nachschneidemesser 64 erleichtert. Im unteren Bodenelement 76 könnten weitere Schlitze (nicht gezeigt) angebracht sein, um die korrekte Ausrichtung der Nachschneidemesser 64 in der Längsrichtung der Befestigungselemente 86 zu erleichtern. Die Befestigungselemente 86 werden in die Öffnungen 82 eingesteckt und durch die Muttern 90 gesichert. Schließlich wird die Halterung 70 an der Bodenplatte 58 angebracht und der Erntevorsatz 20 mittels des Zylinders 100 abgesenkt.

Falls nur jeweils eine der Kanten 84 der Nachschneidemesser 64 abgenutzt ist, können letztere, wie im vorhergehenden Absatz beschrieben, ausgebaut und um 180° umgedreht werden, oder die ganze Halterung 70 wird umgedreht.

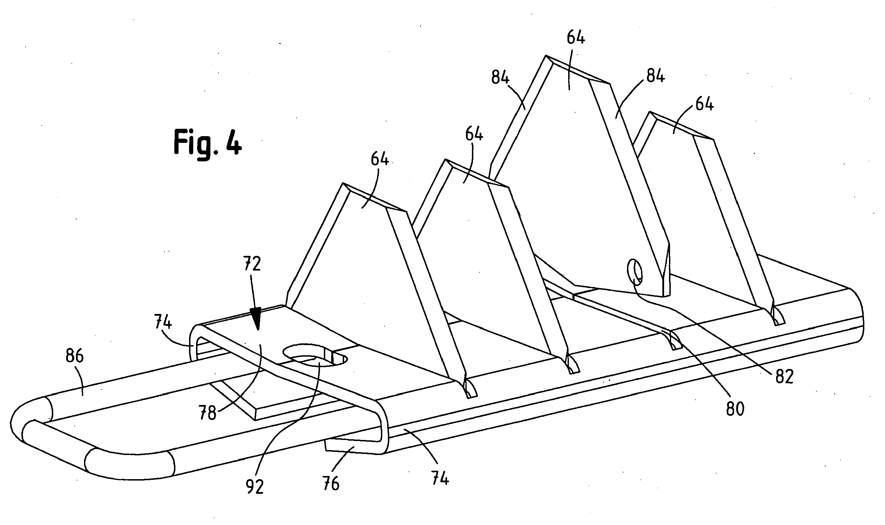

Anstelle der als Schrauben ausgeführten Befestigungselemente 86 können, wie in der zweiten Ausführungsform nach Figur 4, ein oder mehrere Stifte verwendet werden, die sich durch die Öffnungen 82 der Nachschneidemesser 64 der Halterung 70 erstrecken und in axialer Richtung auf beliebige Weise gesichert werden können. Bei der Ausführungsform nach Figur 4 findet als Befestigungselement 86 ein U-förmiger Stift Verwendung, dessen Schenkel sich durch jeweils eine der Öffnungen 82 der Nachschneidemesser 64 erstrecken. Der Stift kommt im montierten Zustand mit seinen Enden an Seitenwänden 94 der Bodenplatte 58 zur Anlage und wird dadurch in axialer Richtung (seiner Längsrichtung) gesichert. Alternativ können auch zwei einzelne Stifte als Befestigungselement 86 verwendet und in der beschriebenen Weise in Längsrichtung gesichert werden, oder es werden zwei splintartige Stifte verwendet. Die Platte 78 ist in ihren in Flussrichtung des Ernteguts vor- und nachlaufenden Bereichen geringfügig nach oben gewölbt (wie auch in der Ausführungsform nach Figur 3). Das untere Bodenelement 76 umfasst zwei Hälften, die sich jeweils nach unten und innen an die Schenkel 74 anschließen und zwischen sich einen Spalt freilassen. Das Bodenelement 76 ist somit mit den Schenkeln 74 und der Platte 78 einteilig hergestellt. Dadurch erübrigt sich das Anschweißen des Bodenelements 76.

Bei der Ausführungsform nach Figur 4 werden die Nachschneidemesser 46 in der Flussrichtung des Ernteguts dadurch fixiert, dass die Nachschneidemesser 64 unterhalb der Kanten 84 mit ihren vor- und nachlaufenden Flächen an den Innenseiten der Schenkel 74 anliegen. In vertikaler Richtung erfolgt die Fixierung durch das Befestigungselement 86, das von unten an den nach oben gewölbten Bereichen der Platte 78 anliegt. In axialer Richtung des Befestigungselements 86 werden die Nachschneidemesser 64 durch die Schlitze 80 und 68 fixiert.

Der Aus- und Einbau der Nachschneidemesser 64 erfolgt analog zur Ausführungsform nach Figur 3, jedoch ist lediglich das Befestigungselement aus den Öffnungen 82 herauszuziehen bzw. wieder hinein zu stecken.

Falls die Nachzerkleinerungseinrichtung 62 nicht benötigt wird, kann die Halterung 70 von der Bodenplatte 58 abgenommen und Blindverschlüsse (nicht gezeigt) in die Schlitze 68 der Bodenplatte 58 gesteckt werden. Alternativ wird die Bodenplatte 58 dann durch eine Bodenplatte 58 ohne Schlitze 68 ausgetauscht.

## Patentansprüche

1. Nachzerkleinerungsvorrichtung (62) mit einer Anzahl an in sich flachen Nachschneidemessern (64), die mit geschärften vor- und nachlaufenden Kanten (84) und mit Öffnungen (82) ausgestattet sind, deren Achsen sich quer zur Fläche der Nachschneidemesser (64) erstrecken, wobei die Nachschneidemesser (64) mittels eines Befestigunselements (86), das sich durch eine Öffnung (82) eines Nachschneidemessers (64) erstreckt, lösbar an einer Halterung (70) fixierbar und angrenzend an den Hüllkreis von Häckselmessern (52) einer Häckseltrommel (22) eines Feldhäckslers (10) anbringbar sind, **dadurch gekennzeichnet, dass** das Befestigungselement (85) sich durch Öffnungen (82) mehrerer Nachschneidemesser (64) erstreck und somit mehrere Nachschneidemesser (64) gleichzeitig an der Halterung (70) fixiert.

2. Nachzerkleinerungsvorrichtung (62) nach Anspruch 1, **dadurch gekennzeichnet, dass** die Halterung (70) eine Platte (78) mit Schlitzen (80) umfasst, durch welche sich die Nachschneidemesser (64) erstrecken, und dass das Befestigungselement (86) kraft- und/oder formschlüssig mit der Platte (78) verbunden ist.

3. Nachzerkleinerungsvorrichtung (62) nach Anspruch 2, **dadurch gekennzeichnet, dass** das Befestigungselement (86) eine Schraube und eine Mutter (90) umfasst, die an einer Seite der Platte (78) angeordnet sind, die einer schneidenden Kante (84) der Nachschneidemesser (64) abgewandt ist.

4. Nachzerkleinerungsvorrichtung (62) nach Anspruch 2, **dadurch gekennzeichnet, dass** das Befestigungselement (86) einen Stift umfasst, der an einer Seite der Platte (78) anliegt, die einer schneidenden Kante (84) der Nachschneidemesser (64) abgewandt ist.

5. Nachzerkleinerungsvorrichtung (62) nach Anspruch 4, **dadurch gekennzeichnet, dass** das Befestigungselement (86) in seiner Längsrichtung arretiert ist.

6. Nachzerkleinerungsvorrichtung (22) nach einem der Ansprüche 2 bis 5, **dadurch gekennzeichnet, dass** an wenigstens einer Seite der Platte (78), die einer schneidenden Kante (84) der Nachschneidemesser (64) abgewandt ist, ein sich zumindest näherungsweise orthogonal zur Platte (78) erstreckender Schenkel (74) angeordnet ist, an dem eine vorlaufende und/oder eine nachlaufende Fläche der Nachschneidemesser 64 anliegt.

7. Feldhäcksler (10) mit einer Häckselmesser (52) tragenden Häckseltrommel (22) und einer den Hüllkreis der Häckselmesser (52) der Häckseltrommel (22) teilumfangsmäßig umgebenden Bodenplatte (58), die eine Nachzerkleinerungsvorrichtung (62) nach einem der vorhergehenden Ansprüche trägt, deren Nachschneidemesser (64) sich angrenzend an den Hüllkreis der Häckselmesser (52) der Häckseltrommel (22) in der Flussrichtung des Emteguts erstrecken.

8. Feldhäcksler (10) nach Anspruch 7, **dadurch gekennzeichnet, dass** die Halterung (70) der Nachzerkleinerungsvorrichtung (62) lösbar oder unlösbar an der Unterseite der Bodenplatte (58) angebracht ist.

9. Feldhäcksler (10) nach Anspruch 8, **dadurch gekennzeichnet, dass** die Halterung (70) in einem veränderbaren Abstand von der Häckseltrommel (22) angebracht ist.

10. Feldhäcksler (10) nach einem der Ansprüche 7 bis 9, **dadurch gekennzeichnet, dass** die Bodenplatte (58) Schlitze (68) aufweist, durch die sich die Nachschneidemesser (64) erstrecken.

## Claims

1. Fine crushing device (62) with a number of crusher blades (64) which are flat per se and are equipped with sharpened leading and trailing edges (84) and with openings (82), the axes of which extend transversely with respect to the surface of the crusher blades (64), wherein the crusher blades (64) can be fixed releasably to a holding device (70) and can be attached adjacent to the envelope circle of chopping blades (52) of a forage chopping cylinder (22) of a forage harvester (10) by means of a fastening element (86) which extends through an opening (82) in the crushing blade (64), **characterized in that** the fastening element (86) extends through openings (82) in a plurality of crusher blades (64) and therefore fixes a plurality of crusher blades (64) to the holding device (70) simultaneously.

2. Fine crushing device (62) according to Claim 1, **characterized in that** the holding device (70) comprises a plate (78) with slots (80) through which the crusher blades (64) extend, and **in that** the fastening element (86) is connected in a frictional and/or form-fitting manner to the plate (78).

3. Fine crushing device (62) according to Claim 2, **characterized in that** the fastening element (86) comprises a screw and a nut (90) which are arranged on a side of the plate (78) that faces away from a cutting edge (84) of the crusher blades (64).

4. Fine crushing device (62) according to Claim 2, **characterized in that** the fastening element (86) comprises a pin which bears against a side of the plate (78) which faces away from a cutting edge (84) of the crusher blades (64).

5. Fine crushing device (62) according to Claim 4, **characterized in that** the fastening element (86) is locked in its longitudinal direction.

6. Fine crushing device (22) according to one of Claims 2 to 5, **characterized in that** a limb (74) which extends at least approximately orthogonally to the plate (78) and against which a leading and/or a trailing surface of the crusher blades (64) bears is arranged on at least one side of the plate (78) that faces away from a cutting edge (84) of the crusher blades (64).

7. Forage harvester (10) with a forage chopping cylinder (22) bearing chopping blades (52) and with a baseplate (58) which, in terms of parts of its circumference, surrounds the envelope circle of the chopping blades (52) of the forage chopping cylinder (22) and bears a fine crushing device (62) according to one of the preceding claims, the crusher blades (64) of which extend adjacent to the envelope circle of the chopping blades (52) of the forage chopping cylinder (22) in the direction of flow of the crop.

8. Forage harvester (10) according to Claim 7, **characterized in that** the holding device (70) of the fine crushing device (62) is attached releasably or nonreleasably to the lower side of the baseplate (58).

9. Forage harvester (10) according to Claim 8, **characterized in that** the holding device (70) is attached at a variable distance from the forage chopping cylinder (22).

10. Forage harvester (10) according to one of Claims 7 to 9, **characterized in that** the baseplate (58) has slots (68) through which the crusher blades (64) extend.

## Revendications

1. Dispositif de broyage secondaire (62) doté d'un certain nombre de lames de coupe secondaires (64) de forme plate en soi, qui sont munies d'arêtes aiguisées avant et arrière (84) ainsi que d'ouvertures (82), dont les axes s'étendent transversalement à la surface de la lame de coupe secondaire (64), les lames de coupe secondaires (64) pouvant être fixées de manière amovible à une fixation (70) au moyen d'un élément de fixation (86) qui s'étend à travers une ouverture (82) d'une lame de coupe secondaire (64) et pouvant être montées à proximité du cercle d'enveloppe de lames hacheuses (52) d'un rotor hacheur (22) d'une faucheuse-hacheuse (10), **caractérisé en ce que** l'élément de fixation (85) s'étend à travers des ouvertures (82) de plusieurs lames de coupe secondaires (64) et fixe ainsi plusieurs lames de coupe secondaires (64) en même temps sur la fixation (70).

2. Dispositif de broyage secondaire (62) selon la revendication 1, **caractérisé en ce que** la fixation (70) comprend une plaque (78) avec des fentes (80), à travers lesquelles s'étendent les lames de coupe secondaires (64) et **en ce que** l'élément de fixation (86) est connecté par engagement par force et/ou par coopération de forme à la plaque (78).

3. Dispositif de broyage secondaire (62) selon la revendication 2, **caractérisé en ce que** l'élément de fixation (86) comprend une vis et un écrou (90), qui sont disposés d'un côté de la plaque (78) qui est tourné à l'opposé d'une arête de coupe (84) de la lame de coupe secondaire (64).

4. Dispositif de broyage secondaire (62) selon la revendication 2, **caractérisé en ce que** l'élément de fixation (86) comprend une broche qui s'applique contre un côté de la plaque (78) qui est tourné à l'opposé d'une arête de coupe (84) de la lame de coupe secondaire (64).

5. Dispositif de broyage secondaire (62) selon la revendication 4, **caractérisé en ce que** l'élément de fixation (86) est bloqué dans sa direction longitudinale.

6. Dispositif de broyage secondaire (62) selon l'une quelconque des revendications 2 à 5, **caractérisé en ce que**, sur au moins un côté de la plaque (78) qui est tourné à l'opposé d'une arête de coupe (84) de la lame de coupe secondaire (64), est disposée une branche (74) s'étendant au moins approximativement perpendiculairement à la plaque (78), contre laquelle s'applique une surface avant et/ou arrière de la lame de coupe secondaire (64).

7. Faucheuse-hacheuse (10) comprenant un rotor hacheur (22) portant des lames hacheuses (52) et une plaque de sol (58) entourant le cercle d'enveloppe des lames hacheuses (52) du rotor hacheur (22) sur une partie de sa circonférence, et qui porte un dispositif de broyage secondaire (62) selon l'une quelconque des revendications précédentes, dont les lames de coupe secondaires (64) s'étendent de manière adjacente au cercle d'enveloppe des lames hacheuses (52) du rotor hacheur (22) dans la direction du flux du produit récolté.

8. Faucheuse-hacheuse (10) selon la revendication 7, **caractérisée en ce que** la fixation (70) du dispositif de broyage secondaire (62) est montée de manière amovible ou non amovible sur le côté inférieur de la plaque de sol (58).

9. Faucheuse-hacheuse (10) selon la revendication 8, **caractérisée en ce que** la fixation (70) est montée à une distance variable du rotor hacheur (22).

10. Faucheuse-hacheuse (10) selon l'une quelconque des revendications 7 à 9, **caractérisée en ce que** la plaque de sol (58) présente des fentes (68) à travers lesquelles s'étendent les lames de coupe secondaires (64).
